# FASCICULE DE BREVET EUROPEEN

(11) **EP 2 307 465 B1**
(45) Date de publication et mention de la délivrance du brevet: **19.12.2012**
(21) Numéro de dépôt: 09740392.7
(22) Date de dépôt: 27.07.2009
(51) Int. Cl.: C08F 10/02, C08F 255/02

(54) **FABRICATION DE POLYETHYLENE GREFFE A PARTIR DE MATIERES RENOUVELABLES, POLYETHYLENE OBTENU ET UTILISATIONS**
HERSTELLUNG VON GEPFROPFTEM POLYETHYLEN AUS ERNEUERBAREN MATERIALIEN, DAS ERHALTENE POLYETHYLEN UND VERWENDUNGEN DAVON
PRODUCTION OF GRAFTED POLYETHYLENE FROM RENEWABLE MATERIALS THE OBTAINED POLYETHYLENE AND USES THEREOF

(30) Priorité: 29.07.2008 FR 0855199
(43) Date de publication de la demande: 13.04.2011
(73) Titulaire: Arkema France, 92700 Colombes (FR)
(72) Inventeur: DEVISME, Samuel, F-76000 Rouen (FR); CHOPINEZ, Fabrice, BALA CYNWYD, PA 19904 (US); PRADEL, Jean-Laurent, F-27800 Boisney (FR); LE, Guillaume, F-14460 Colombelles (FR); ROUSSEL, Thomas, F-69006 Lyon (FR)
(74) Mandataire: Gavin, Pablo
(86) Numéro de dépôt international: PCT/FR2009/051508
(87) Numéro de publication internationale: WO 2010/012946

(56) Documents cités:
- EP-A1- 1 101 773
- WO-A-2008/067627
- US-A- 4 670 620
- US-A1- 2007 219 521

## Description

La présente invention se rapporte à un procédé de fabrication de polyéthylène greffé à partir de matières premières renouvelables.

En particulier, l'invention se rapporte à un procédé de fabrication de polyéthylène greffé à partir d'éthylène obtenu par déshydratation d'alcools issus de la fermentation de matières premières renouvelables, de préférence les matières premières renouvelables sont des matières végétales.

Le polyéthylène est la polyoléfine la plus anciennement préparée industriellement. Il existe plusieurs sortes de polyéthylènes que l'on classe généralement en fonction de leur densité.

Le polymère à haute densité (HDPE pour « high density polyethylene ») de masse volumique généralement comprise entre 0,940 et 0,965 g/cm³, ce polyéthylène se distingue par un faible degré de branchement et en conséquence par des forces intermoléculaires fortes et par une force de tension élevée. Le faible branchement est assuré par le choix du catalyseur et des conditions réactionnelles.

Le polymère à moyenne densité (MDPE pour « médium density polyethylene ») de masse volumique généralement comprise entre 0,925 et 0,940 g/cm³, ce polyéthylène présente de bonnes propriétés aux chocs.

Le polymère à basse densité (LDPE pour « low density polyethylene ») de masse volumique généralement comprise entre 0,915 et 0,935 g/cm³, ce polymère présente un degré élevé de branchement de chaînes (courtes et longues). Ce polyéthylène présente une force de tension faible et une ductilité accrue.

Le polymère linéaire à basse densité (LLDPE pour «linear low density polyethylene ») de masse volumique généralement comprise entre 0,915 et 0,935 g/cm³, ce polymère se présente sous une forme substantiellement linéaire avec un grand nombre de branches courtes.

Le polymère à très basse densité (VLDPE pour « very low density polyethylene ») de masse volumique généralement comprise entre 0,860 et 0,910 g/cm³, ce polymère se présente sous une forme substantiellement linéaire avec un très grand nombre de branches courtes.

Il existe en outre des sous-catégories lorsque le polyéthylène est réticulé ou encore en fonction de son poids moléculaire.

Par ailleurs, le polyéthylène est souvent utilisé en association avec un second matériau différent du polyéthylène. On peut réaliser par exemple des films multicouches comprenant au moins une couche de polyéthylène et au moins une autre couche de ce second matériau. A titre d'exemple de second matériau, on peut citer les polymères polaires ainsi que les métaux, les alliages de métaux ou leurs oxydes. En tant que polymère polaire, on peut citer les polymères azotés et/ou oxygénés comme un polyamide, un copolymère saponifié d'éthylène et d'acétate de vinyle ou un polyester. Cependant, ces matériaux adhèrent peu ou n'adhèrent pas au polyéthylène. Il est donc nécessaire d'utiliser une couche de « liant » intermédiaire qui adhère aux couches de polyéthylène et à la seconde couche afin de pouvoir associer ces 2 couches dans le film multicouche. Si des polyéthylènes d'origine renouvelable ont été décrits dans l'art antérieur, comme par exemple dans le document US2007/021952 1, il n'existe pas aujourd'hui de liant réalisé à partir de matières premières renouvelables permettant d'associer une couche de polyéthylène à une couche d'un second matériau.

De manière avantageuse et surprenante, les inventeurs de la présente demande ont mis en oeuvre un procédé de fabrication industriel à partir de matières premières renouvelables d'un polyéthylène particulier, qui est un polyéthylène greffé, utile pour la fabrication de liant.

Le procédé selon l'invention permet de s'affranchir au moins en partie des matières premières d'origine fossile et de les remplacer par des matières premières renouvelables.

En outre le polyéthylène obtenu suivant le procédé selon l'invention est de qualité telle qu'il peut d'être utilisé dans toutes les applications dans lesquelles il est connu d'utiliser le polyéthylène greffé, y compris dans les applications les plus exigeantes.

En particulier, il permet de fabriquer un liant à partir de matières premières renouvelables permettant d'associer une couche de polyéthylène avec un second matériau choisi parmi les polymères polaires ainsi que les métaux, les alliages de métaux ou leurs oxydes.

L'invention a pour objet un procédé de fabrication de polyéthylène greffé comprenant les étapes suivantes :
a) fermentation de matières premières renouvelables et, éventuellement purification pour produire au moins un alcool choisi parmi l'éthanol et les mélanges d'alcools comprenant de l'éthanol ;
b) déshydratation de l'alcool obtenu pour produire, dans un premier réacteur, au moins un alcène choisi parmi l'éthylène et les mélanges d'alcènes comprenant de l'éthylène et, éventuellement purification de l'alcène pour obtenir de l'éthylène ;
c) polymérisation, dans un second réacteur, de l'éthylène en polyéthylène ;
d) isolation du polyéthylène obtenu à l'issus de l'étape c) ;
e) greffage du polyéthylène avec au moins un monomère de greffage choisi parmi les acides carboxyliques insaturés ou leurs dérivés fonctionnels, les acides dicarboxyliques insaturés ayant 4 à 10 atomes de carbone et leurs dérivés fonctionnels, les esters alkyliques en C1-C8 ou des dérivés esters glycidyliques des acides carboxyliques insaturés, des sels métalliques d'acides carboxyliques insaturés.

L'invention a également pour objet le polyéthylène susceptible d'être obtenu par le procédé selon l'invention, ou plus généralement le polyéthylène greffé par le monomère de greffage ci-dessus, dans lequel au moins une partie des atomes de carbone est d'origine renouvelable, cette partie d'origine renouvelable pouvant être déterminée selon la norme ASTM D 6866-06.

L'invention a encore pour objet les copolymères et les compositions comprenant ledit polyéthylène et aussi les utilisations de ce polyéthylène.

D'autres objets, aspects, caractéristiques de l'invention apparaîtront à la lecture de la description suivante.

L'étape a) du procédé de fabrication de polyéthylène selon l'invention comprend la fermentation de matières premières renouvelables pour produire au moins un alcool, ledit alcool étant choisi parmi l'éthanol et les mélanges d'alcools comprenant de l'éthanol.

Une matière première renouvelable est une ressource naturelle, par exemple animale ou végétale, dont le stock peut se reconstituer sur une période courte à l'échelle humaine. Il faut en particulier que ce stock puisse se renouveler aussi vite qu'il est consommé. Par exemple, les matières végétales présentent l'avantage de pouvoir être cultivées sans que leur consommation aboutisse à une diminution apparente des ressources naturelles.

A la différence des matériaux issus de matières fossiles, les matières premières renouvelables contiennent du ¹⁴C. Tous les échantillons de carbone tirés d'organismes vivants (animaux ou végétaux) sont en fait un mélange de 3 isotopes : ¹²C (représentant environ 98,892 %), ¹³C (environ 1,108 %) et ¹⁴C (traces: 1,2.10⁻¹⁰ %). Le rapport ¹⁴C/¹²C des tissus vivants est identique à celui de l'atmosphère. Dans l'environnement, le ¹⁴C existe sous deux formes prépondérantes : sous forme de gaz carbonique (CO₂) et sous forme organique, c'est-à-dire de carbone intégré dans des molécules organiques.

Dans un organisme vivant, le rapport ¹⁴C/¹²C est maintenu constant par le métabolisme car le carbone est continuellement échangé avec l'environnement extérieur. La proportion de ¹⁴C étant constante dans l'atmosphère, il en est de même dans l'organisme, tant qu'il est vivant, puisqu'il absorbe ce ¹⁴C au même titre que le ¹²C ambiant. Le rapport moyen de ¹⁴C/¹²C est égal à 1,2x10⁻¹².

Le ¹²C est stable, c'est-à-dire que le nombre d'atomes de ¹²C dans un échantillon donné est constant au cours du temps. Le ¹⁴C est radioactif, le nombre d'atomes de ¹⁴C dans un échantillon décroît au cours du temps (t), sa demi-vie étant égale à 5730 ans.

La teneur en ¹⁴C est sensiblement constante depuis l'extraction des matières premières renouvelables, jusqu'à la fabrication du polyéthylène selon l'invention et même jusqu'à la fin de vie de l'objet fabriqué en ledit polyéthylène.

Par conséquent, la présence de ¹⁴C dans un matériau, et ce, quelque en soit la quantité, donne une indication sur l'origine des molécules le constituant, à savoir qu'elles proviennent de matières premières renouvelables et non de matériaux fossiles.

La quantité de ¹⁴C dans un matériau peut être déterminée par l'une des méthodes décrites dans la norme ASTM D6866-06 (Standard Test Methods for Determining the Biobased Content of Natural Range Materials Using Radiocarbon and Isotope Ratio Mass Spectrometry Analysis).

Cette norme comporte trois méthodes de mesure du carbone organique issu de matières premières renouvelables, dénommé en langue anglaise « biobased carbon ». Les proportions indiquées pour le polyéthylène de l'invention sont de préférence mesurées selon la méthode par spectrométrie de masse ou la méthode par spectrométrie à scintillation liquide décrite dans cette norme, et tout préférentiellement par spectrométrie de masse.

Ces méthodes de mesure évaluent le rapport des isotopes ¹⁴C/¹²C dans l'échantillon et le comparent à un rapport des isotopes ¹⁴C/¹²C dans un matériau d'origine biologique donnant le 100% standard, afin de mesurer le pourcentage de carbone organique de l'échantillon.

De préférence, le polyéthylène selon l'invention comprend une quantité de carbone issu de matières premières renouvelables supérieure à 20%, de préférence supérieure à 50% en masse par rapport à la masse totale de carbone du polyéthylène.

En d'autres termes, le polyéthylène peut comporter au moins 0,24 10⁻¹⁰ % en masse de ¹⁴C, et de préférence au moins 0,6 10⁻¹⁰ % en masse ¹⁴C.

Avantageusement la quantité de carbone issue de matières premières renouvelables est supérieure à 75%, de préférence égale à 100% en masse par rapport à la masse totale de carbone du polyéthylène.

En tant que matières premières renouvelables, on pourra utiliser des matières végétales ; des matières d'origine animale ou des matières d'origine végétale ou animale issues de matériaux récupérés (matériaux recyclés).

Au sens de l'invention, les matières d'origine végétale contiennent au moins des sucres et/ou amidons.

Les matières végétales contenant des sucres sont essentiellement la canne à sucre et la betterave sucrière, on peut également citer l'érable, le palmier-dattier, le palmier à sucre, le sorgho, l'agave américain ; les matières végétales contenant des amidons sont essentiellement les céréales et légumineuses comme le maïs, le blé, l'orge, le sorgho, le froment, le riz, la pomme de terre, le manioc, la patate douce, ou encore les algues.

Parmi les matières issues de matériaux récupérés, on peut notamment citer les déchets végétaux ou organiques comprenant des sucres et/ou amidons.

De préférence les matières premières renouvelables sont des matières végétales.

La fermentation des matières renouvelables s'effectue en présence d'un ou plusieurs microorganismes adéquats, ce microorganisme peut éventuellement avoir été modifié naturellement par une contrainte chimique ou physique, ou génétiquement on parle alors de mutant. Classiquement le microorganisme utilisé est *Saccharomyces cerevisiae* ou un de ses mutants.

En tant que matières premières renouvelables, on peut également utiliser de la cellulose ou de l'hémicellulose voire de la lignine qui, en présence des microorganismes adéquats, peuvent être transformées en matières comprenant du sucre. Parmi ces matières renouvelables, on compte la paille, le bois, le papier, qui peuvent provenir avantageusement de matériaux récupérés.

Les listes présentées ci-dessus ne sont pas limitatives.

De préférence, l'étape de fermentation est suivie d'une étape de purification destinée à séparer l'éthanol des autres alcools.

A l'étape b) est mise en oeuvre la déshydratation du ou des alcools obtenus pour produire, dans un premier réacteur, au moins un alcène choisi parmi l'éthylène et les mélanges d'alcènes comprenant de l'éthylène, le produit secondaire de la déshydratation étant de l'eau.

Généralement, la déshydratation est effectuée à l'aide d'un catalyseur à base d'alumine, de préférence de gamma-alumine comme le catalyseur commercialisé par EUROSUPPORT sous la dénomination commerciale ESM 110 ® (alumine trilobique non dopée contenant peu -environ 0,04%- de Na₂O résiduel).

Les conditions opératoires de la déshydratation font partie des connaissances générales de l'homme du métier, à titre indicatif, la déshydratation est généralement effectuée à une température de l'ordre de 400 °C.

Un autre avantage du procédé selon l'invention est son économie en énergie : les étapes de fermentation et déshydratation du procédé selon l'invention sont effectuées à des températures relativement basses, inférieures à 500°C, de préférence inférieures à 400°C, en comparaison l'étape de craquage et de vapocraquage du pétrole en éthylène s'effectue à une température de l'ordre de 800°C.

Cette économie d'énergie s'accompagne aussi d'une diminution du taux de CO₂ émis dans l'atmosphère.

De préférence une étape de purification est effectuée lors de l'étape a) ou lors de l'étape b).

Les étapes éventuelles de purification (purification de(s) alcool(s) obtenus à l'étape a), purification de(s) alcène(s) obtenus à l'étape b)) sont avantageusement conduites par absorption sur des filtres classiques tels que tamis moléculaires, zéolithes, noir de carbone...).

Si l'alcool obtenu à l'étape a) a été purifié de façon à isoler l'éthanol, l'alcène obtenu à l'étape b) est de l'éthylène.

Si l'alcool obtenu à l'étape a) n'a pas été purifié, on obtient à l'issue de l'étape b) un mélange d'alcènes comprenant de l'éthylène.

Avantageusement, on effectue au moins une étape de purification lors de l'étape a) et/ou de l'étape b) afin d'obtenir de l'éthylène de degré de pureté suffisant pour effectuer une polymérisation. On préfèrera obtenir de l'éthylène de degré de pureté supérieure à 85% en poids, de préférence à 95% en poids, de manière préférée à 99% en poids et tout préférentiellement à 99,9% en poids. De manière particulièrement préférée, l'alcool obtenu à l'étape a) est purifié de façon à isoler l'éthanol, en conséquence l'alcène obtenu à l'étape b) est l'éthylène.

Les principales impuretés présentes dans l'éthylène issu de la déshydratation de l'éthanol sont l'éthanol, le propane et l'acétaldéhyde.

Avantageusement, l'éthylène devra être purifié, c'est-à-dire que l'éthanol, le propane et l'acétaldéhyde devront être éliminés, pour pouvoir polymériser facilement à l'étape c).

L'éthylène, l'éthanol, le propane et l'acétaldéhyde peuvent être séparés en mettant en oeuvre une ou plusieurs distillations à basse température.

Les températures d'ébullition de ces composés sont les suivantes :

| composé | température d'ébullition (°C) |
|---|---|
| éthylène | -103,7 |
| propane | -42,1 |
| acétaldéhyde | 20,8 |
| éthanol | 75,5 |

L'éthylène, l'éthanol, le propane et l'acétaldéhyde sont refroidis à environ - 105°C, de préférence -103,7°C puis distillés pour extraire l'éthylène.

Un autre avantage du procédé selon la présente invention concerne les impuretés. Les impuretés présentes dans l'éthylène issu de la déshydratation de l'éthanol sont totalement différentes de celles présentes dans l'éthylène issu de craquage ou vapocraquage. En particulier parmi les impuretés présentes dans l'éthylène issu de craquage ou vapocraquage, on compte le dihydrogène et le méthane et ceci quelle que soit la composition de la charge initiale.

Classiquement la séparation du dihydrogène et du méthane s'effectue après compression à 36 bar et refroidissement à environ -120°C. Dans ces conditions, le dihydrogène et le méthane, liquides, sont séparés dans le déméthaniseur ; puis l'éthylène est récupéré à 19 bar et -33°C.

Le procédé selon la présente demande permet de s'affranchir de l'étape de séparation du dihydrogène et du méthane, et permet également de refroidir le mélange à -105°C à pression atmosphérique au lieu de -120°C à 36 bar. Le refroidissement de cette étape de séparation peut se faire aussi sous pression pour augmenter la température d'ébullition des composés à séparer (par exemple vers 20 bar et -35°C). Ces différences contribuent également à rendre le procédé selon l'invention plus économique (économie de matériel et économie d'énergie qui s'accompagne aussi d'une diminution du taux de CO₂ émis dans l'atmosphère).

Un autre avantage est que l'éthylène obtenu à l'étape b) du procédé selon l'invention ne comprend pas d'acétylène contrairement à l'éthylène obtenu par craquage ou vapocraquage. Or l'acétylène est très réactif et provoque des réactions secondaires d'oligomérisation, l'obtention d'éthylène sans acétylène est donc particulièrement avantageuse.

Un autre avantage est que le procédé selon l'invention peut être mis en oeuvre dans des unités de production localisées sur le lieu de production des matières premières. En outre, la taille des unités de production du procédé selon l'invention est beaucoup plus petite que la taille d'une raffinerie : les raffineries sont en effet de grosses installations situées généralement loin des centres de production des matières premières et alimentées par des pipelines.

L'étape c) de polymérisation de l'éthylène peut être conduite de différentes façons selon le type de polyéthylène que l'on souhaite synthétiser.

De préférence le polyéthylène synthétisé est le LLDPE.

La synthèse du LLDPE peut être effectuée selon deux méthodes principales : la méthode en solution et la méthode en lit fluidisé (en phase gazeuse).

La méthode en solution peut être mise en oeuvre en introduisant l'éthylène dans un réacteur autoclave, voire dans un réacteur tubulaire, en présence d'au moins un solvant et d'au moins un comonomère. Le réacteur peut fonctionner de manière adiabatique ou être muni d'un réfrigérant extérieur.

Le comonomère utilisé est une alpha-oléfine comprenant de 3 à 10 atomes de carbone et plus particulièrement choisie parmi les oléfines contenant 4, 6 ou 8 atomes de carbone, de manière particulièrement préférée l'alpha oléfine est choisie parmi l'hex-1-ène, le 2-méthylpentène et l'oct-1-ène.

Le catalyseur utilisé peut être de type Ziegler-Natta ou métallocène, voire dans une moindre mesure de type Phillips.

Les catalyseurs Ziegler-Natta sont classiquement constitués d'un dérivé halogéné d'un métal de transition du groupes IV ou V de la classification périodique des éléments (titane, vanadium) et d'un composé alkylé d'un métal des groupes 1 à III.

Les catalyseurs métallocènes sont des catalyseurs monosites constitué généralement d'un atome d'un métal pouvant être du zirconium ou du titane et de deux molécules cycliques alkyles liées au métal, plus spécifiquement, les catalyseurs métallocènes sont habituellement composés de 2 cycles cyclopentadiéniques liés au métal. Ces catalyseurs sont fréquemment utilisés avec des aluminoxanes comme cocatalyseur ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IVA, VA, et VIA. Des métaux lanthanides peuvent aussi être utilisés.

Les catalyseurs Phillips sont obtenus par dépôt d'oxyde de chrome sur un support (silice ou silice aluminium) de surface spécifique élevée, de l'ordre de 400 à 600 m²/g. Ces catalyseurs sont ensuite réduits et activés à très haute température (400-800°C).

La température du réacteur est généralement comprise entre 150 et 300 °C et la pression entre 3 et 20 MPa.

En sortie de réacteur, le gaz enrichi en monomère est renvoyé vers l'entrée du réacteur et le flux liquide comprenant le polyéthylène est traité pour séparer le polyéthylène du solvant. Le polyéthylène est ensuite conduit dans une extrudeuse.

Selon la méthode en lit fluidisé ou en phase gazeuse, le milieu réactionnel est constitué de particules de catalyseur autour desquelles se forme le polyéthyléne, de l'éthylène et des co-monomères. Le polyéthylène produit est maintenu dans la phase solide, tandis que l'éthylène et les co-monomères forment le gaz porteur du lit fluidisé. L'injection de l'éthylène et des co-monomères permet aussi d'évacuer les calories de la réaction et donc de contrôler la température de polymérisation.

Le comonomère utilisé est une alpha oléfine comprenant de 3 à 10 atomes de carbone et plus particulièrement choisie parmi les oléfines contenant 4 à 8 atomes de carbone, de manière particulièrement préférée l'alpha oléfine est choisie parmi le but-1-ène et l'hex-1-ène, voire le 2-méthylpentène.

Le catalyseur utilisé peut être de type Ziegler-Natta, métallocène ou Phillips.

La température du réacteur est généralement comprise entre 80 et 105 °C et la pression entre 0.7 et 2 MPa.

Ce procédé est mis en oeuvre dans un réacteur vertical, l'éthylène est comprimé à la pression requise et introduit à l'entrée (partie basse) du réacteur. Le contrôle de la pression de l'éthylène en entrée de réacteur permet le contrôle de la pression de réaction. Le catalyseur et l'éventuel co-catalyseur, et le ou les comonomères sont introduits avec l'éthylène dans le réacteur.

En sortie de réacteur, le mélange gazeux et le polyéthylène sont extraits du lit fluidisé puis on diminue la pression afin de séparer le polyéthylène des gaz. Les constituants du mélange gazeux (éthylène et les comonomères) sont séparés et éventuellement renvoyés dans le réacteur. Le polyéthylène (solide) est purgé pour supprimer les éventuelles traces d'éthylène et conduit dans une extrudeuse.

Le polyéthylène basse densité (radicalaire) est produit par polymérisation radicalaire à pression élevée de l'éthylène.

Deux types de réacteur sont utilisés pour la synthèse du LDPE : les réacteurs autoclaves (agités) et les réacteurs tubulaires.

Le milieu réactionnel est constitué d'une solution de polymère et de monomère, le polymère obtenu est isolé par détentes successives, repris à l'état fondu par une extrudeuse puis transformé en granulés.

La synthèse du polyéthylène haute densité (HDPE) peut être effectuée selon deux méthodes principales : la méthode de polymérisation en suspension et la méthode en phase gazeuse.

Ces deux méthodes peuvent être mises en oeuvre au moyen d'un catalyseur de type Phillips ou d'un catalyseur de type Ziegler voire métallocène.

Ainsi dans la méthode de polymérisation en suspension au moyen d'un catalyseur Phillips, la réaction s'effectue en suspension dans un hydrocarbure liquide généralement l'isobutane, on parle de procédé « particle-form ». La température du milieu est de l'ordre de 100 °C et la pression doit être telle que le milieu reste liquide c'est-à-dire environ 3MPa.

La méthode de polymérisation en suspension au moyen d'un catalyseur Ziegler est mise en oeuvre au moyen d'un catalyseur à base de tétrachlorure de titane associé à un composé organométallique par exemple le chlorure d'alkylaluminium, la réaction s'effectue en suspension dans un hydrocarbure du type hexane. La température du milieu est légèrement inférieure à 100 °C et la pression est de quelques mégapascals.

Généralement un comonomère tel que le but-1-ène et l'hex-1-ène est utilisé pour contrôler la densité du polyéthylène et de l'hydrogène est utilisé pour contrôler le poids moléculaire.

L'utilisation de catalyseurs métallocènes permet la fabrication de polyéthylènes particulièrement préférés les «polyéthylènes métallocènes ou m-PE».

Dans le cas des polymères linéaires basse densité, ce sont des polyéthylènes de distribution moléculaire très étroite, avec des branchements courts régulièrement répartis, ils sont alors appelés «m-LLDPE».

De préférence, le polyéthylène préparé à l'étape c) du procédé selon la présente demande est du polyéthylène linéaire à basse densité métallocène «m-LLDPE» préparé selon la méthode en lit fluidisé, au moyen d'un catalyseur métallocène.

Le polyéthylène obtenu à l'étape c) est ensuite isolé (étape d)). Puis le polyéthylène est ensuite conduit soit vers une extrudeuse, soit directement vers un autre réacteur où il subira un traitement de greffage.

Le polyéthylène isolé à l'issue de l'étape d) est ensuite greffé.

Comme décrit dans la suite, le greffage du polyéthylène est effectué avec au moins un monomère de greffage choisi parmi les acides carboxyliques insaturés ou leurs dérivés fonctionnels, les acides dicarboxyliques insaturés ayant 4 à 10 atomes de carbone et leurs dérivés fonctionnels, les esters alkyliques en C₁-C₈ ou des dérivés esters glycidyliques des acides carboxyliques insaturés, des sels métalliques d'acides carboxyliques insaturés.

Le polymère est greffé avec un acide carboxylique insaturé. On ne sortirait pas du cadre de l'invention en utilisant un dérivé fonctionnel de cet acide.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicycto(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylénecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium. On préfère le méthacrylate de glycidyle. De manière encore plus préférée, on préfère l'anhydride maléique.

Selon une variante particulière, on pourra utiliser de l'anhydride maléique comprenant des atomes de carbone d'origine renouvelable.

L'anhydride maléique peut être obtenu selon le procédé décrit dans la demande FR 0854896 et la demande internationale PCT/FR2009/051426 de la Demanderesse, qui sont incorporés par référence, un des variantes de fabrication comprenant les étapes suivantes :
a) fermentation de matières premières renouvelables et, éventuellement purification pour produire un mélange comprenant au moins du butanol ;
b) oxydation du butanol en anhydride maléique à une température généralement comprise entre 300 et 600 °C, au moyen d'un catalyseur à base d'oxydes de vanadium et/ou de molybdène ;
c) isolation de l'anhydride maléique obtenu à l'issus de l'étape b).

Le procédé de fabrication de l'anhydride maléique comprenant des atomes de carbone d'origine renouvelable est décrit en détail de la page 2 ligne 21 à la page 8 ligne 15 de la demande internationale PCT/FR2009/051426, qui est incluse par référence dans la présente demande.

Un avantage de l'utilisation de l'anhydride maléique issu de ressources renouvelables est que l'on limite encore la quantité de ressources non renouvelables pour fabriquer ce polymère.

De plus, un avantage de ce procédé est que la fermentation conduit à un nombre plus restreint d'isomères du butanol que la voie chimique d'hydroformylation du propylène. Le butanol obtenu par fermentation des matières premières renouvelables est particulièrement approprié. En particulier, du butanol issu d'une fermentation de matières premières renouvelables présente un ratio isobutanol/n-butanol inférieur à du butanol purifié issu de matières premières fossiles, et cela avant même l'étape éventuelle d'isolement du n-butanol. L'isobutanol et le n-butanol, présentent des propriétés physicochimiques très proches, de sorte qu'une séparation de ces produits est coûteuse. La disposition de n-butanol, pauvre en isobutanol constitue donc un avantage économique majeur pour le procédé objet de l'invention, puisqu'il permet de produire un anhydride maléique d'excellente qualité à moindre coût.

Divers procédés connus peuvent être utilisés pour greffer un monomère de greffage sur le polyéthylène. Le mélange peut contenir les additifs utilisés habituellement lors la mise en oeuvre des polyoléfines à des teneurs comprises entre 10 ppm et 5%, tels que les antioxydants par exemple à base de molécules phénoliques substituées etc... , les agents de protections UV, les agents de mise en oeuvre tels que par exemple les amides gras, l'acide stéarique et ses sels, les polymères fluorés (connus comme agents pour éviter les défauts d'extrusion), les agents anti- buée à base d'amines, les agents anti-bloquants tels que la silice ou le talc, les mélanges maîtres avec colorants, les agents nucléants etc...

Ceci peut être réalisé en chauffant le polymère à température élevée, environ 100° à environ 300°C, en présence ou en l'absence d'un solvant avec ou sans générateur de radicaux.

Des solvants ou leurs mélanges appropriés qui peuvent être utilisés dans cette réaction sont le benzène, toluène, xylène, chlorobenzène, cumène, etc. Le dioxyde de carbone dans son état liquide et/ou supercritique est également considéré comme un solvant ou cosolvant dans ce type de procédé.

Des générateurs de radicaux appropriés qui peuvent être utilisés comprennent les peroxydes, préférentiellement les peroxy esters, les peroxydes de dialkyl, les hydroperoxydes ou les peroxycétals. Ces peroxydes sont commercialisés par ARKEMA sous la marque Luperox®. On peut citer comme exemples de peroxy esters le t-butyl peroxy-2-ethylhexanoate (Luperox 26), le t-butyl peroxyacetate (Luperox 7), le t-amyl peroxyacetate (Luperox 555), le t-butyl perbenzoate (Luperox P), le t-amyl perbenzoate (Luperox TAP) et le OO-t-butyl 1-(2-ethylhexyl)monoperoxycarbonate (Luperox TBEC). A titre de peroxydes de dialkyl, on peut citer le 2,5-dimethyl-2,5-di-(t-butylperoxy)hexane (Luperox 101), le dicumyl peroxyde (Luperox DC), l'alpha-alpha'-bis (t-butylperoxy) diisopropylbenzene (Luperox F40), le di-t-butyl-peroxyde (Luperox DI), le di-t-amyl-peroxyde (Luperox DTA) et le 2,5-dimethyl-2,5-di-(t-butylperoxy)hexyne-3 (Luperox 130). Un exemple d'hydroperoxyde est le t-butyl-hydroperoxyde (Luperox TBH70). On peut utiliser par exemple comme peroxycétal le 1,1-di-(t-butylpcroxy)-3,3,5-trimethylcylclohexane (Luperox 231), l'ethly-3,3-di-(t-butylperoxybutyrate) (Luperox 233) ou l'ethly-3,3-di-(t-amylperoxybutyrate) (Luperox 533).

La réaction de greffage peut alors être réalisée selon un procédé batch en solution ou un procédé continu avec un outil de mélange en fondu.

Dans le cas d'un procédé batch de greffage en solution, le polyéthylène dissout dans un solvant approprié cité ci-dessus est porté à température de réaction en présence du monomère et du générateur de radicaux. La température et le temps de réaction étant choisis en adéquation avec la cinétique de décomposition du générateur de radicaux, ce dernier pouvant être introduit en continu. Préférentiellement, on utilise une température allant de 50 à 200°C. On préfère utiliser comme générateur de radicaux pour le greffage en solution la famille des peroxy esters. Le traitement du polyéthylène greffé est réalisé par précipitation dans un non-solvant de celui-ci.

Par non-solvant, on attend un solvant organique ou non, ou un mélange de solvants organiques ou non ne permettant pas de solubiliser plus de 10% du polymère greffé, à titre d'exemple on peut citer l'eau, les cétones, les alcools, les esters et leurs mélanges. A la suite de la précipitation, le polyéthylène greffé est obtenu sous forme de poudre ou d'agglomérats par filtration et séchage. Eventuellement, le polyéthylène greffé peut subir une étape supplémentaire, dite de lavage, par extraction solide-liquide entre lui-même et un non-solvant précédemment cité.

Dans le cas d'un procédé de greffage continu, on utilise un outil d'extrusion des matières plastiques à l'état fondu connu de l'homme de l'art. A titre d'exemple, on peut citer les mélangeurs internes, les mélangeurs à cylindre, les extrudeuses monovis, bi-vis contra ou co-rotatives, les co-malaxeurs continus. L'outil de greffage peut être l'un des outils cités ci-dessus ou leur association, comme par exemple un comalaxeur associé à une monovis de reprise, une bi-vis corotative associée à une pompe à engrenage, etc. Dans le cas d'une extrusion, l'outil est configuré de manière à identifier une zone de fusion du polymère, une zone de mélange et réaction entre les espèces présentes et une zone de détente/dégazage pour éliminer les composés volatils. Ces différentes zones peuvent être matérialisées par la configuration de la vis de l'outil, l'utilisation de zone de restriction, ou l'accouplement d'outils entre eux. L'outil est également équipé d'un système de filtration et/ou d'un système de granulation à joncs ou sous eau.

Le polyéthylène est introduit dans l'outil dont la température du corps est régulée, cette température étant choisie en adéquation avec la cinétique de décomposition du générateur de radicaux. On préfère utiliser comme générateur de radicaux pour le greffage continu les familles des peroxydes de dialkyl, des hydroperoxydes ou des peroxycétals. Préférentiellement, on utilise une température allant de 100 à 300°C, plus préférentiellement de 180 à 250°C.

Le polyéthylène, le monomère de greffage et le générateur de radicaux peuvent être introduits simultanément ou séparément dans l'outil d'extrusion. En particulier, le monomère et le générateur de radicaux peuvent être introduits simultanément avec le polymère en alimentation principale, soit séparément en injection liquide le long de l'outil, ensemble ou séparément l'un de l'autre.

A l'étape d'injection, on peut associer au monomère et/ou au générateur de radicaux une fraction d'un solvant tel que ceux cités précédemment. Cette fraction de solvant a pour but de faciliter le mélange entre les espèces réactives ainsi que l'élimination des composés volatils lors de l'étape de dégazage.

A l'étape de détente/dégazage, on applique un vide adapté à la dévolatilisation des composés volatils et au polyéthylène. Le niveau de vide pouvant aller de quelques millibars à plusieurs centaines.

Enfin, le polyéthylène greffé est récupéré en sortie de l'outil d'extrusion sous forme de granulé à l'aide d'un outil de granulation.

Dans le polymère modifié par greffage obtenu de la façon susmentionnée, la quantité du monomère de greffage peut être choisie d'une façon appropriée mais elle est de préférence de 0,01 à 10%, mieux de 600 ppm à 50000 ppm, par rapport au poids de polymère greffés.

Selon un mode de l'invention, on effectue un greffage sur un mélange de polyéthylène selon l'invention non greffé et d'un autre polymère appelé « polymère de cogreffage », le mélange est introduit dans l'outil d'extrusion avec un monomère de greffage et un générateur de radicaux. Le polymère de cogreffage est différent du polyéthylène selon l'invention c'est-à-dire qu'il n'a pas les mêmes caractéristiques.

En particulier le polymère de cogreffage peut être un polyéthylène, il s'agit alors d'un polyéthylène de densité et/ou teneur en ¹⁴C différente(s) de celle(s) du polyéthylène selon l'invention.

On peut cependant utiliser tout type de polymère comme polymère de cogreffage. Comme exemples de polymère de cogreffage on peut citer les élastomères, les homopolymères et copolymères de type polyamide, polyester, polyvinylique, polyuréthane, polystyrène comme les copolymères à base de styrène tels que les SBR (styrène-butadiène-rubber), les copolymères blocs styrène/butadiène/styrène (SBS), les copolymères blocs styrène/éthylène/butadiène/styrène (SEBS) et les copolymères blocs styrène/isoprène/stryrène (SIS). On peut également citer les homopolymères et copolymères de type polyoléfine comme par exemple les homopolymères de l'éthylène et du propylène ou leurs copolymères statistique ou blocs tels que les EPR (éthylène propylène rubber aussi désignés (EPM)) et les EPDM (éthylène propylène diène), les copolymères éthylène-ester vinylique d'acide carboxylique comme le copolymère éthylène-acétate de vinyle, les copolymères éthylène-ester d'acide (méth)acrylique insaturés ou les copolymères éthylène-acide (méth)acrylique insaturés. De préférence, le polymère de cogreffage est de type polystyrène ou de type polyoléfine.

La quantité du monomère greffé est déterminée par dosage des fonctions succiniques par spectroscopie IRTF. Le MFI ou indice d'écoulement à l'état fondu du polymère greffé, est compris entre 0,1 et 15 g/ 10 min (ASTM D 1238-190°C-2,16 kg), avantageusement entre 0,1 et 5 g/10min, de préférence entre 0,1 et 3 g/10 min.

La présente invention concerne les compositions comprenant du polyéthylène, obtenu à partir de matières d'origine renouvelable non greffé et les compositions comprenant du polyéthylène obtenu à partir de matières d'origine renouvelable, ledit polyéthylène étant greffé.

La présente demande de brevet vise plus particulièrement plusieurs familles de compositions qui peuvent être utiles en tant que liants, particulièrement en coextrusion, comprenant :
- un polyéthylène greffé selon l'invention, éventuellement dilué dans un polymère additionnel,
- un mélange cogreffé d'au moins un polymère de cogreffage et de polyéthylène non greffé obtenu selon les étapes a) à d) du procédé selon l'invention, éventuellement dilué dans un polymère additionnel, ledit mélange étant cogreffé par au moins un des monomères de greffage choisis parmi les acides carboxyliques insaturés ou leurs dérivés fonctionnels, les acides dicarboxyliques insaturés ayant 4 à 10 atomes de carbone et leurs dérivés fonctionnels, les esters alkyliques en C₁-C₈ ou des dérivés esters glycidyliques des acides carboxyliques insaturés, des sels métalliques d'acides carboxyliques insaturés.

Ces compositions qui comprennent un polyéthylène selon l'invention comprennent par conséquent un polyéthylène au moins en partie obtenu à partir de matières d'origine renouvelable.

Le polymère additionnel peut être choisi parmi les polymères de cogreffage, il peut également être choisi parmi les polyéthylènes greffés ou non greffés selon l'invention.

On ne sortirait pas du cadre de l'invention si le polymère additionnel est constitué d'un mélange de polymères.

La présente invention concerne aussi les utilisations du polyéthylène greffé obtenu à partir de matières d'origine renouvelable et en particulier les utilisations en tant que liant de coextrusion, en tant que modifiant choc dans des polymères (c'est-à-dire en tant qu'adjuvant dans un polymère permettant d'améliorer la résistance aux chocs dudit polymère), en tant que compatibilisant de charges minérales (c'est-à-dire un adjuvant qui permet d'améliorer la compatibilité avec les charges minérales).

Plus particulièrement la présente invention vise un liant de coextrusion comprenant du polyéthylène obtenu à partir de matières d'origine renouvelable, son utilisation pour faire une structure multicouche comprenant un tel liant de coextrusion et la structure obtenue.

Quelques modes de réalisation des liants selon l'invention sont décrits ci-dessous.

Un premier type de compositions de liants comprend :
de 5 à 35 % en poids de polyéthylène de densité comprise entre 0,860 et 0,960, greffé par au moins un des monomères de greffage décrits ci-dessus ;
de 5 à 95 % en poids de polyéthylène non greffé,
de 0 à 60 % d'au moins un modifiant choisi parmi les copolymères de l'éthylène avec un monomère choisi parmi les alpha-oléfines, les esters d'acides carboxyliques insaturés ou les esters vinyliques d'acides carboxyliques saturés, les polymères à caractère élastomérique,
le polyéthylène greffé étant au moins en partie obtenu à partir de matières d'origine renouvelable. Avantageusement le liant ne comprendra pas plus de 5% en poids de monomères de greffage.

Les alpha-oléfines qui peuvent être utilisées en tant que monomère sont le propylène, le butène, l'héxène, l'octène.

Les esters d'acides carboxyliques insaturés qui peuvent être utilisés en tant que monomère sont les (méth)acrylates d'alkyle dont l'alkyle a de 1 à 24 atomes de carbone, tels que par exemple le méthacrylate de méthyle, l'acrylate d'éthyle, l'acrylate de n-butyle, l'acrylate d'isobutyle, l'acrylate de 2-éthylhexyle.

Les esters vinyliques d'acides carboxyliques saturés qui peuvent être utilisés en tant que monomère sont l'acétate ou le propionate de vinyle.

Par « polymères à caractère élastomérique » selon la présente demande, on entend les polymères définis dans la norme ASTM D412, c'est-à-dire un matériau qui peut être étiré à température ambiante à deux fois sa longueur, maintenu ainsi 5 minutes puis revenir à moins de 10 % près à sa longueur initiale après avoir été relâché. On entend également par « polymère à caractère élastomérique », un polymère n'ayant pas exactement les caractéristiques précédentes mais pouvant être étiré et revenir sensiblement à sa longueur initiale.

A titre d'exemple on peut citer :
- les EPR (éthylène propylène rubber aussi désignés (EPM) et les EPDM (éthylène propylène diène),
les élastomères styréniques tels que les SBR (styrène-butadiène-rubber), les copolymères blocs styrène/butadiène/styrène (SBS), les copolymères blocs styrène/éthylène/butadiène/styrène (SEBS) et les copolymères blocs styrène/isoprène/stryrène (SIS)

Dans ce premier type de compositions de liants, on compte celles décrites dans la demande de brevet EP 1 136 536 A1, à la différence que les polyéthylènes utilisés dans cette demande de brevet de l'art antérieur ne sont pas obtenus à partir de matières d'origine renouvelable.

Plus particulièrement, selon une première variante, le premier type de liant de coextrusion comprend les compositions (telles que décrites dans EP 1 136 536 A1) contenant :
- 5 à 35 parties d'un polymère (A) lui-même constitué d'un mélange de 80 à 20 parties d'un polyéthylène métallocène (A1) de densité comprise entre 0,865 et 0,965, avantageusement entre 0,865 et 0,94, et de 20 à 80 parties d'un polyéthylène LLDPE (A2) non métallocène, le mélange de (A1) et de (A2) étant cogreffé par un acide carboxylique insaturé en tant que monomère de greffage ; et
- 95 à 65 parties d'un polyéthylène (B) choisi parmi les polyéthylènes homopolymères ou copolymères et les élastomères ; le mélange de (A) et (B) étant tel que :
- la teneur en acide carboxylique insaturé greffé est comprise entre 30 et 10⁵ ppm ;
- le MFI ou indice d'écoulement à l'état fondu (norme ASTM D 1238, à 190°C, sous 2,16 kg) est compris entre 0,1 et 10 g/10min ;
- à la différence que, dans les compositions selon la présente demande au moins un parmi les polyéthylène métallocène (A1), polyéthylène LLDPE (A2) non métallocène et polyéthylène (B) sont au moins en partie obtenu à partir de matières d'origine renouvelable.

Selon une deuxième variante, le premier type de liant de coextrusion comprend les compositions (telles que décrites dans EP 1 136 536 A1) constituées :
- d'un mélange de 80 à 20 parties d'un polyéthylène métallocène (A1) de densité comprise entre 0,865 et 0,965, avantageusement entre 0,865 et 0,94, et de 20 à 80 parties d'un polyéthylène LLDPE (A2) non métallocène, le mélange de (A1) et de (A2) étant cogreffé par un acide carboxylique insaturé; le mélange de (A1) et de (A2) étant tel que :
- la teneur en acide carboxylique insaturé greffé est comprise entre 30 et 10⁵ ppm ;
- le MFI ou indice d'écoulement à l'état fondu (norme ASTM D 1238, à 190°C, sous 2,16 kg) est compris entre 0,1 et 10 g/10min;
- à la différence que, dans les compositions selon la présente demande au moins un parmi les polyéthylène métallocène (A1) et polyéthylène LLDPE (A2) non métallocène sont au moins en partie obtenus à partir de matières d'origine renouvelable.

La présente demande concerne encore une structure multicouche comprenant une couche contenant le liant de coextrusion selon l'une des deux variantes précédentes et directement attachée à celle-ci, une couche (E) d'une résine polaire azotée ou oxygénée telle qu'une résine polyamide, de polycétone aliphatique, de copolymère saponifié d'éthylène de vinyle (EVOH) ou de polyester, ou d'une couche métallique.

La couche (E) peut également au moins en partie obtenue à partir de matières d'origine renouvelable.

L'invention a également pour objet un corps creux rigide constitué d'une structure telle que décrite précédemment.

Un deuxième type de compositions de liants comprend :
■ un mélange comprenant de 50 à 95 % en poids d'au moins un polyéthylène de densité comprise entre 0,860 et 0,960, avantageusement entre 0,865 et 0,94, et de 5 à 50 % en poids d'au moins un polymère différent des polyéthylènes, le mélange étant greffé par au moins un des monomères de greffage décrits ci-dessus ;
■ éventuellement au moins un polyéthylène de densité comprise entre 0,860 et 0,965 non greffé,
■ éventuellement au moins un modifiant choisi parmi les copolymères de l'éthylène avec un monomère choisi parmi les alphaoléfines, les esters d'acides carboxyliques insaturés ou les esters vinyliques d'acides carboxyliques saturés, les polymères à caractère élastomérique,
le polyéthylène greffé et/ou le polyéthylène non greffé sont au moins en partie obtenus à partir de matières d'origine renouvelable, avantageusement le liant ne comprendra pas plus de 5% en poids de monomères de greffage.

Dans ce deuxième type de compositions de liants, on compte_celles décrites dans la demande de brevet EP 0 802 207 A1, à la différence que les polyéthylènes utilisés dans cette demande de brevet de l'art antérieur ne sont pas obtenus à partir de matières d'origine renouvelable.

Plus particulièrement, selon cette deuxième variante, le deuxième type de compositions comprend les compositions (telles que décrites dans EP 0 802 207 A1) contenant
■ au moins (A) un polyéthylène ou un copolymère de l'éthylène,
■ au moins (B) choisi parmi (B1) le polypropylène ou un copolymère du propylène, (B2) le poly(1-butène) homo ou copolymère, et (B3) le polystyrène homo ou copolymère,
le mélange de (A) et (B) étant greffé par un monomère fonctionnel, ce mélange greffé étant lui-même éventuellement dilué dans au moins une polyoléfine (C) ou dans au moins un polymère (D) à caractère élastomérique ou dans un mélange de (C) et (D) ;
le polyéthylène ou copolymère de l'éthylène (A) étant au moins en partie obtenu à partir de matières d'origine renouvelable.

Le polyéthylène ou copolymère de l'éthylène (A) peut être du LDPE, du HDPE, du LLDPE, du VLDPE ou mPE.

La présente demande concerne encore une structure multicouche composée d'une couche contenant le liant de coextrusion du deuxième type décrit précédemment et directement attachée à celle-ci, une couche (E) de résine polaire azotée ou oxygénée telle qu'une résine polyamide, de copolymère saponifié d'éthylène d'acétate de vinyle, d'une résine polyester, d'un oxyde minéral déposé sur un polymère tel que le polyéthylène, le polyéthylène téréphtalate ou l'EVOH, ou bien une couche métallique.

La couche (E) peut également au moins en partie obtenue à partir de matières d'origine renouvelable.

L'invention a également pour objet un film de protection constitué du liant de coextrusion du deuxième type.

Un troisième type de liant comprend :
du polyéthylène de densité comprise entre 0,860 et 0,965, avantageusement entre 0,865 et 0,94, greffé par au moins un des monomères de greffage décrits ci-dessus
et éventuellement du polyéthylène non greffé,
le polyéthylène greffé et/ou le polyéthylène non greffé sont au moins en partie obtenus à partir de matières d'origine renouvelable.

Dans ce troisième type de compositions de liants, on compte celles décrites dans la demande de brevet EP 1 400 566 A1 à la différence que les polyéthylènes utilisés dans cette demande de brevet de l'art antérieur ne sont pas obtenus à partir de matières d'origine renouvelable.

Plus particulièrement, ce troisième type de liant de coextrusion comprend :
- 10 à 35 % en poids d'un polymère (A) lui-même constitué d'un mélange de 80 à 20 % en poids d'un polyéthylène métallocène (A1) de densité comprise entre 0,865 et 0,965, avantageusement entre 0,865 et 0,94, et de 20 à 80 parties d'un polyéthylène LLDPE (A2) non métallocène, le mélange de (A1) et de (A2) étant cogreffé par un monomère de greffage choisi parmi les acides carboxyliques insaturés et leurs dérivés, la teneur du monomère de greffage dans ledit mélange étant comprise entre 30 et 100 000 ppm ;
- 40 à 60 % en poids d'un copolymère bloc styrène/butadiène/styrène (B) avec 50 à 90 % en moles de styrène ;
- 20 à 35 % en poids de polyéthylène (C), le total faisant 100%, ; le mélange de (A), (B) et (C) étant tel que le MFI ou indice d'écoulement à l'état fondu (norme ASTM D 1238, à 190°C, sous 2,16 kg) est compris entre 0,1 et 10 g/10min ;
- au moins un parmi les polyéthylène métallocène (A1), polyéthylène LLDPE (A2) non métallocène et polyéthylène (C) étant au moins en partie obtenu à partir de matières d'origine renouvelable.

La présente demande concerne encore une structure multicouche comprenant un liant de coextrusion du troisième type décrit précédemment et une couche (E) directement attachée à l'une des 2 faces de ladite couche (L), ladite couche (E) étant une couche de polystyrène homo ou copolymère.

Selon une variante préférée cette structure multicouche comprend une couche (F) directement attachée à la seconde face de la couche (L), la couche (L) étant disposée entre les couches (E) et (F), ladite couche (F) étant soit une couche de polymère choisi parmi le groupe des polyamides, des polycétones aliphatiques, des copolymères saponifiés d'éthylène et d'acétate de vinyle (EVOH), des polyéthylènes, des polyesters et des polystyrènes soit une couche métalliques.

Les couches (E) et/ou (F) peuvent être également au moins en partie obtenues à partir de matières d'origine renouvelable.

### Exemple

Un exemple de mise en oeuvre du procédé de polymérisation est présenté ci-dessous. Cette mise en oeuvre est schématisée à la figure annexée.

Cette mise en oeuvre ne constitue en aucun cas une limitation de l'étape de polymérisation du procédé selon la présente invention.

Cette mise en oeuvre est effectuée au moyen du dispositif suivant comprenant un réacteur R, et un circuit de recyclage des gaz comprenant deux séparateurs de type cyclone C1 et C2, deux échangeurs de chaleur E1 et E2, un compresseur Cp, une pompe P.

Le réacteur R comprend une plaque de distribution (ou distributeur) D qui délimite une zone inférieure qui est une zone d'admission des gaz et liquides et une zone supérieure F où est situé le lit fluidisé.

Le distributeur D est une plaque dans laquelle sont aménagés des trous, ce distributeur est destiné à homogénéiser le débit des gaz entrant dans le réacteur.

Selon cette mise en oeuvre un mélange d'éthylène et de co-monomère (1-hexène) est introduit par la conduite 1, puis par la conduite 2 dans le réacteur où est effectuée la polymérisation en lit fluidisé.

Le lit fluidisé comprend le catalyseur et des particules de polymères préformées, ce lit est maintenu dans un état fluidisé à l'aide d'un courant de gaz ascendant provenant du distributeur D. Le volume du lit fluidisé est maintenu constant par soutirage du polyéthylène formé au moyen de la conduite de décharge 11.

La polymérisation de l'éthylène est une réaction exothermique, la température à l'intérieur du réacteur est maintenue constante en contrôlant la température du gaz (recyclé) introduit dans le réacteur par la conduite 10.

Le gaz comprenant les molécules d'éthylène et de 1-hexène qui n'ont pas réagi et un agent de transfert (hydrogène) sort du réacteur et entre dans le circuit de recyclage par la conduite 3. Ce gaz est traité dans le séparateur de type cyclone C1 pour éliminer les éventuelles fines particules de polyéthylène qui auraient pu être entraînées. Le gaz traité est ensuite introduit par la conduite 4 dans un premier échangeur de chaleur Eu où il est refroidi. Le gaz sort de l'échangeur de chaleur E1 par la conduite 5, entre dans un compresseur Cp, le fluide ressort par la conduite 6. Le fluide est refroidi dans un deuxième échangeur de chaleur E2 de manière à condenser les comonomères. La conduite 7 amène le fluide de l'échangeur E2 au séparateur de type cyclone C2. Les gaz sont séparés des liquides dans le séparateur de type cyclone C2, les liquides sortent du séparateur de type cyclone C2 par la conduite 10 et sont introduits dans le réacteur R, les gaz sortent du séparateur de type cyclone C2 par la conduite 8 entrent dans la pompe P puis sont introduit par la conduite 9, puis par la conduite 2 dans le réacteur.

Du polyéthylène a été préparé à partir d'éthylène obtenu en mettant en oeuvre les étapes a) et b) selon le procédé de la présente demande.

3 essais ont été réalisés sur ce dispositif avec 3 fluides dont la composition en entrée de réacteur est la suivante :

| | Essai n° 1 | Essai n°2 | Essai n°3 |
|---|---|---|---|
| éthylène (% mole) | 70,0 | 69,9 | 66,1 |
| 1-hexène (% mole) | 1,02 | 1,01 | 1,02 |
| Azote (% mole) | 28,98 | 29,09 | 32,88 |
| Hydrogène (ppm) | 500 | 550 | 170 |

La réaction a été conduite dans les conditions opératoires suivantes :
pression dans le réacteur : 25 bar
température dans le réacteur : 90°C
vitesse du gaz : 0,6 m/s
hauteur du lit fluidisé :15 m
température des fluides à l'entrée du réacteur : 40°C.
rendement 125 kg/m³/h

Les polyéthylènes obtenus présentent les propriétés suivantes :

| | Essai n°1 | Essai n°2 | Essai n°3 |
|---|---|---|---|
| Indice d' écoulement (g/10 min) | 1,11 | 3,39 | 0,11 |
| densité (g/cm³) | 0,9162 | 0,9175 | 0,9115 |

L'indice d'écoulement est mesuré selon la norme ASTM D 1238 (190°C ;2,16 kg). La densité est mesurée selon la norme ASTM D 1505.

Les polyéthylènes obtenus sont ensuite greffés par extrusion réactive : on introduit le polyéthylène dans une extrudeuse, la température d'extrusion étant de 200°C. On injecte en un point de l'extrudeuse un mélange (50%/50% en masse) de l'anhydride maléique et un peroxyde de dialkyle et on règle les débits massiques tels que le débit de polyéthylène est 100 fois plus important que celui du mélange peroxyde-anhydride. On récupère le polymère greffé en sortie d'extrudeuse.

## Revendications

1. Procédé de fabrication de polymère greffé **caractérisé en ce qu'**il comprend les étapes suivantes :
a) fermentation de matières premières renouvelables et, éventuellement purification pour produire au moins un alcool choisi parmi l'éthanol et les mélanges d'alcools comprenant de l'éthanol ;
b) déshydratation de l'alcool obtenu pour produire, dans un premier réacteur, au moins un alcène choisi parmi l'éthylène et les mélanges d'alcènes comprenant de l'éthylène et, éventuellement purification de l'alcène pour obtenir de l'éthylène ;
c) polymérisation, dans un second réacteur, de l'éthylène en polyéthylène ;
d) isolation du polyéthylène obtenu à l'issue de l'étape c) ;
e) greffage du polyéthylène avec au moins un monomère de greffage choisi parmi les acides carboxyliques insaturés ou leurs dérivés fonctionnels, les acides dicarboxyliques insaturés ayant 4 à 10 atomes de carbone et leurs dérivés fonctionnels, les esters alkyliques en C1-C8 ou des dérivés esters glycidyliques des acides carboxyliques insaturés, des sels métalliques d'acides carboxyliques insaturés

2. Procédé de fabrication de polyéthylène selon la revendication 1, **caractérisé en ce que** les matières premières renouvelables sont des matières végétales choisies parmi la canne à sucre et la betterave sucrière, l'érable, le palmier-dattier, le palmier à sucre, le sorgho, l'agave américain, le maïs, le blé, l'orge, le sorgho, le froment, le riz, la pomme de terre, le manioc, la patate douce, les algues.

3. Procédé de fabrication selon la revendication 1 ou 2 dans laquelle le monomère de greffage est l'anhydride maléique.

4. Procédé de fabrication selon l'une des revendications précédentes dans laquelle l'anhydride maléique est obtenu à partir de matières premières renouvelables.

5. Procédé de fabrication de polyéthylène selon la revendication 1 ou 2, **caractérisé en ce qu'**une étape de purification est effectuée lors de l'étape a) ou lors de l'étape b).

6. Procédé de fabrication de polyéthylène selon l'une quelconque des revendications 1 à 3, **caractérisé en ce que** le polyéthylène préparé à l'étape c) est du polyéthylène linéaire à basse densité metallocène «m-LLDPE» préparé selon la méthode en solution au moyen d'un catalyseur métallocène.

7. Procédé de fabrication d'une composition, ladite composition comprenant du polyéthylène obtenu suivant le procédé selon l'une quelconque des revendications 1 à 6.

8. Procédé de fabrication d'un liant de coextrusion, ledit liant comprenant du polyéthylène obtenu suivant le procédé selon l'une quelconque des revendications 1 à 6.

9. Procédé de fabrication d'un liant de coextrusion selon la revendication 8, comprenant une étape de dilution dans un polymère additionnel.

10. Procédé de fabrication d'un liant de coextrusion comprenant un mélange cogreffé d'au moins un polymère de cogreffage et d'un polyéthylène obtenu selon les étapes a) à d) du procédé selon la revendication 1, ce mélange étant cogreffé par au moins un des monomères de greffage choisis parmi les acides carboxyliques insaturés ou leurs dérivés fonctionnels, les acides dicarboxyliques insaturés ayant 4 à 10 atomes de carbone et leurs dérivés fonctionnels, les esters alkyliques en C₁-C₈ ou des dérivés esters glycidyliques des acides carboxyliques insaturés, des sels métalliques d'acides carboxyliques insaturés.

11. Procédé de fabrication d'un liant de coextrusion selon la revendication 10, comprenant une étape de dilution dans un polymère additionnel.

12. Procédé de fabrication d'une structure multicouche, **caractérisé en ce qu'**il comprend un liant de coextrusion obtenu selon l'une quelconque des revendications 8 à 11.

## Claims

1. Process for the manufacture of grafted polymer, **characterized in that** it comprises the following stages:
a) fermentation of renewable starting materials and optionally purification, to produce at least one alcohol chosen from ethanol and mixtures of alcohols comprising ethanol;
b) dehydration of the alcohol obtained in order to produce, in a first reactor, at least one alkene chosen from ethylene and mixtures of alkenes comprising ethylene and optionally purification of the alkene in order to obtain ethylene;
c) polymerization, in a second reactor, of the ethylene to give polyethylene;
d) isolation of the polyethylene obtained on conclusion of stage c);
e) grafting of the polyethylene with at least one grafting monomer chosen from unsaturated carboxylic acids or their functional derivatives, unsaturated dicarboxylic acids having from 4 to 10 carbon atoms and their functional derivatives, C₁-C₈ alkyl esters of unsaturated carboxylic acids or glycidyl ester derivatives of unsaturated carboxylic acids, or metal salts of unsaturated carboxylic acids.

2. Process for the manufacture of polyethylene according to Claim 1, **characterized in that** the renewable starting materials are plant materials chosen from sugar cane and sugar beet, maple, date palm, sugar palm, sorghum, American agave, corn, wheat, barley, rice, potato, cassava, sweet potato or algae.

3. Manufacturing process according to Claim 1 or 2, in which the grafting monomer is maleic anhydride.

4. Manufacturing process according to one of the preceding claims, in which the maleic anhydride is obtained from renewable starting materials.

5. Process for the manufacture of polyethylene according to Claim 1 or 2, **characterized in that** a purification stage is carried out during stage a) or during stage b).

6. Process for the manufacture of polyethylene according to any one of Claims 1 to 3, **characterized in that** the polyethylene prepared in stage c) is metallocene linear low-density polyethylene, "m-LLDPE", prepared according to the solution method using a metallocene catalyst.

7. Process for the manufacture of a composition, said composition comprising the polyethylene obtained according to the process according to any one of Claims 1 to 6.

8. Process for the manufacture of a coextrusion tie, said tie comprising polyethylene obtained according to the process according to any one of Claims 1 to 6.

9. Process for the manufacture of a coextrusion tie according to Claim 8, comprising a stage of dilution in an additional polymer.

10. Process for the manufacture of a coextrusion tie comprising a cografted blend of at least one cografting polymer and of a polyethylene obtained according to stages a) to d) of the process according to Claim 1, this blend being cografted by at least one of the grafting monomers chosen from unsaturated carboxylic acids or their functional derivatives, unsaturated dicarboxylic acids having from 4 to 10 carbon atoms and their functional derivatives, C₁-C₈ alkyl esters of unsaturated carboxylic acids or glycidyl ester derivatives of unsaturated carboxylic acids, or metal salts of unsaturated carboxylic acids.

11. Process for the manufacture of a coextrusion tie according to Claim 10, comprising a stage of dilution in an additional polymer.

12. Process for the manufacture of a multilayer structure, **characterized in that** it comprises a coextrusion tie obtained according to any one of Claims 8 to 11.

## Patentansprüche

1. Verfahren zur Herstellung eines gepfropften Polymer, **dadurch gekennzeichnet, dass** es die folgenden Schritte umfasst:
a) Fermentation von nachwachsenden Rohstoffen und gegebenenfalls Aufreinigung zur Herstellung von mindestens einem Alkohol, ausgewählt aus der Reihe Ethanol und ethanolhaltige Alkoholmischungen;
b) Entwässerung des erhaltenen Alkohols zur Herstellung in einem ersten Bioreaktor von mindestens einem Alken, ausgewählt aus der Reihe Ethylen und ethylenhaltige Alkenmischungen, und gegebenenfalls Aufreinigung des Alkens, um zu Ethylen zu gelangen;
c) Polymerisation des Ethylens zu Polyethylen in einem zweiten Bioreaktor;
d) Isolieren des in Schritt c) erhaltenen Polyethylens;
e) Pfropfen des Polyethylens mit mindestens einem Pfropfmonomer, ausgewählt aus der Reihe ungesättigte Carbonsäuren oder ihre funktionellen Derivate, ungesättigte Dicarbonsäuren mit 4 bis 10 Kohlenstoffatomen und ihre funktionellen Derivate, C1-C8-Alkylester oder Glycidylesterderivate von ungesättigten Carbonsäuren, Metallsalze von ungesättigten Carbonsäuren.

2. Verfahren zur Herstellung von Polyethylen nach Anspruch 1, **dadurch gekennzeichnet, dass** es sich bei den nachwachsenden Rohstoffen um pflanzliche Materialien, ausgewählt aus der Reihe Zuckerrohr und Zuckerrübe, Ahorn, Dattelpalme, Zuckerpalme, Sorghum, amerikanische Agave, Mais, Korn, Gerste, Weizen, Reis, Kartoffel, Maniok, Süßkartoffel und Algen handelt.

3. Verfahren zur Herstellung nach Anspruch 1 oder 2, wobei es sich bei dem Pfropfmonomer um Maleinsäureanhydrid handelt.

4. Verfahren zur Herstellung nach einem der vorhergehenden Ansprüche, wobei das Maleinsäureanhydrid aus nachwachsenden Rohstoffen stammt.

5. Verfahren zur Herstellung von Polyethylen nach Anspruch 1 oder 2, **dadurch gekennzeichnet, dass** während Schritt a) oder während Schritt b) ein Aufreinigungsschritt erfolgt.

6. Verfahren zur Herstellung von Polyethylen nach einem der Ansprüche 1 bis 3, **dadurch gekennzeichnet, dass** es sich bei dem in Schritt c) hergestellten Polyethylen um nach dem Lösungsverfahren mit einem Metallocen-Katalysator hergestelltes m-LLDPE (Metallocene Linear Low Density Polyethylene) handelt.

7. Verfahren zur Herstellung einer Zusammensetzung, wobei die Zusammensetzung nach dem Verfahren nach einem der Ansprüche 1 bis 6 erhaltenes Polyethylen umfasst.

8. Verfahren zur Herstellung eines Coextrusionsbindemittels, wobei das Bindemittel nach dem Verfahren nach einem der Ansprüche 1 bis 6 erhaltenes Polyethylen umfasst.

9. Verfahren zur Herstellung eines Coextrusionsbindemittels nach Anspruch 8, das einen Verdünnungsschritt in einem weiteren Polymer umfasst.

10. Verfahren zur Herstellung eines Coextrusionsbindemittels, das eine Mischung umfasst, die mit mindestens einem Copfropfpolymer und einem Polyethylen, das gemäß den Schritten a) bis d) des Verfahrens nach Anspruch 1, erhalten wird, cogepfropft ist, wobei die Mischung mit mindestens einem der Pfropfmonomere, ausgewählt aus der Reihe ungesättigte Carbonsäuren oder ihre funktionellen Derivate, ungesättigte Dicarbonsäuren mit 4 bis 10 Kohlenstoffatomen und ihre funktionellen Derivate, Cl-C8-Alkylester oder Glycidylesterderivate von ungesättigten Carbonsäuren, Metallsalze von ungesättigten Carbonsäuren, cogepfropft ist.

11. Verfahren zur Herstellung eines Coextrusionsbindemittels nach Anspruch 10, das einen Verdünnungsschritt in einem weiteren Polymer umfasst

12. Verfahren zur Herstellung einer mehrlagigen Struktur, **dadurch gekennzeichnet, dass** sie ein nach einem der Ansprüche 8 bis 11 erhaltenes Coextrusionsbindemittel umfasst.
